# EUROPÄISCHE PATENTSCHRIFT

(11) **EP 0 598 289 B1**
(45) Veröffentlichungstag und Bekanntmachung des Hinweises auf die Patenterteilung: **08.10.1997**
(21) Anmeldenummer: 93117944.4
(22) Anmeldetag: 05.11.1993
(51) Int. Cl.: F16B 19/02, F16B 2/16

(54) **Bolzenförmiges Passelement zum Fixieren, Zentrieren und/oder Positionieren von Passbohrungen aufweisenden Teilen**
Bolt-like locating element for the fixing, centring and/or positioning of parts with centring holes
Boulon de centrage pour la fixation, le centrage et/ou le positionnement des éléments avec des trous de centrage

(30) Priorität: 16.11.1992 DE 4238614
(43) Veröffentlichungstag der Anmeldung: 25.05.1994
(73) Patentinhaber: Schanz, Manfred, D-79650 Schopfheim (DE)
(72) Erfinder: Schanz, Manfred, D-79650 Schopfheim (DE)
(74) Vertreter: Schmitt, Hans, Dipl.-Ing.

(56) Entgegenhaltungen:
- EP-A- 0 156 575
- DE-A- 2 421 258
- DE-U- 9 103 621
- FR-A- 1 076 422
- FR-A- 2 206 810
- US-A- 2 872 838
- US-A- 3 945 294

## Beschreibung

Die Erfindung betrifft ein bolzenförmiges Paßelement zum Fixieren, Zentrieren und/oder Positionieren von Paßbohrungen aufweisenden Teilen, insbesondere von aufeinanderliegenden Platten oder dergleichen mit einer die Paßoberfläche aufweisenden äußeren Buchse oder Hülse, in deren Innerem Verdrängungskörper vorgesehen sind, die durch axiale Verstellung die radiale Außenabmessung des Paßelementes innerhalb der Paßbohrungen vergrößern.

Ein derartiges bolzenförmiges Paßelement ist als Dübel zur Lagefixierung eines Bauteiles an einem Referenzteil aus der EP-0 232 485 A2 bekannt. In einer Außenhülse ist dabei ein Innenkonus vorgesehen, in welchen ein Konuskegel als Verdrängungskörper in axialer Richtung einziehbar ist, wodurch die mit einer Mehrzahl von Längsschlitzen ausgestattete Hülse aufgeweitet wird.

Dadurch können beispielsweise zwei übereinstimmende Aufnahmebohrungen aufweisende Werkstücke verbunden und gegeneinander positioniert und in ihrer Lage fixiert werden. Zum Beispiel kann ein Schraubstock auf diese Weise auf einer Grundplatte in seiner Lage fixiert werden.

Es hat sich gezeigt, daß bei dieser Anordnung Schmutzteilchen, die zum Beispiel bei einer Werkstückbearbeitung entstehen, vor allem in die Längsschlitze der Hülse eindringen können, so daß bei Positionierungen, die für sehr präzise Arbeitsabläufe erforderlich sind, vor der Montage dieses bekannten Paßelementes dessen Demontage und Reinigung erforderlich ist.

Eine weitere Schwierigkeit kann entstehen, wenn eine der in Übereinstimmung zu bringenden Paßbohrungen maßlich etwas von der anderen abweicht, wobei solche Abweichungen aufgrund üblicher Toleranzen in der Größenordnung von wenigen tausendstel Millimetern bis zu hundertstel Millimeter betragen können. Das bekannte Paßelement legt sich bei solchen Verhältnissen mit seiner Außenwand an der Innenseite der kleineren Öffnung an und ist danach nicht mehr weiter aufzuweiten, so daß die andere, etwas größere Bohrung nicht mehr fixiert wird. Dies kann dazu führen, daß beispielsweise ein auf diese Weise zu positionierender Schraubstock nicht gut festgelegt ist, jedoch entstehen dadurch vor allem Positionierungenauigkeiten in der Größenordnung der Maßabweichungen.

Aus DE-A 2 421 258 ist ein Dübel mit im wesentlichen zylindrischem Bolzenkörger bekannt, bei welchem zwischen dem Außenmantel des Bolzenkörgers und dem Innenmantel einer Hülse ein mit einer Anzahl kleiner Kugeln angefüllter, allseitig verschlossener Hohlraum vorgesehen ist. Dadurch soll bei Verkürzung des Hohlraumes eine Zunahme des Durchmessers ermöglicht werden, so daß eine Anpassung an eine Aufnahmebohrung mit vorstehenden Kieseln oder unerwünschten Hohlräumen möglich ist. Somit geht es bei diesem vorbekannten Dübel nicht um ein bolzenförmiges Paßelement zum Fixieren, Zentrieren und/oder Positionieren von Paßbohrungen aufweisenden Teilen. Vielmehr geht es nur darum, die in Wänden oder dergleichen Baukörpern häufig sehr ungenauen Bohrungen mit dem Dübel so auszufüllen, daß zufriedenstellende Auszugswerte erzielt werden.

Der Erfindung liegt deshalb die Aufgabe die zugrunde, ein Paßelement der eingangs erwähnten Art zu schaffen, welches auch an in ihren Abmessungen geringfügig abweichenden Bohrungen zweier zu verbindender Teile jeweils festgelegt und verspannt werden kann. Gleichzeitig soll die Gefahr von Verschmutzungen weitestgehend vermindert sein.

Für eine erste Lösung dieser Aufgabe ist das eingangs erwähnte bolzenförmige Paßelement dadurch gekennzeichnet, daß als Verdrängungskörper im Inneren der Hülse jeweils in einer Querschnittsebene des Paßelementes wenigstens drei Kugelnangeordnet sind, die mit ihren Mittelpunkten auch einem konzentrisch zu der Mittelachse des Paßelementes liegenden Kreis angeordnet sind und jeweils die Innenseite der Hülse mittelbar oder unmittelbar beaufschlagen, daß sich diese Verdrängungskörper jeweils an wenigstens einer gegenüber einer radialen Querschnittsebene der Hülse unter einem Winkel stehenden Kugelfläche abstützen, deren Fläche so angeordnet ist, daß sich der von der Berührstelle ausgehende Zwischenraum in radialer Richtung nach außen etwa konisch erweitert, und daß in axialer Richtung mehrere aus wenigstens drei Kugeln gebildete Zonen vorgesehen sind, daß das Paßelement über seine axiale Erstreckung eine gleichbleibende Außenabmessung hat und die auf parallelen Kreisen oder Querschnittsebenen angeordneten mehreren Kugeln jeweils gleich groß sind, daß die zum radialen Verstellen der Kugeln nach außen dienenden Kugelflächen zu Kugeln gehören, die in axialer Richtung nebeneinander in der Mitte des Paßelementes angeordnet sind und jeweils einen Abstand zueinander haben, der kleiner als der Durchmesser der als Verdrängungskörper dienenden Kugeln ist, wobei jeweils in dem sich radial nach außen erweiternden Abstand der in axialer Richtung nebeneinanderliegenden zentralen Kugeln die Verdrängungskugeln angeordnet sind, und daß wenigstens ein in axialer Richtung wirkender Druck- oder Preßkörper vorgesehen ist, dessen axiale Pressung im Inneren der Hülse an den Kugelflächen die axiale Preßkraft in radiale, am Umfang wirkende Druckkräfte umwandelt und aufteilt, und daß die Wandung der Hülse durch die radialen Druckkräfte elastisch zumindest geringfügig aufweitbar ist.

Es entstehen also über die Länge der Hülse verteilt aufgrund der axial nebeneinander angeordneten Verdrängungskörper jeweils Zonen, in denen von diesen Verdrängungskörpern ausgehende Aufweitungen stattfinden, so daß eine solche Spann- oder Ausweitungszone unabhängig von einer Nachbarzone ist. Wird also ein Teil des Paßelementes in einer engeren Bohrung fixiert, können in seinem daraus überstehenden, beispielsweise in eine etwas größere Bohrung ragenden Bereich entsprechend etwas größere Aufweitungen durch die dort befindlichen Verdrängungskörper bewirkt werden. Somit kann auch bei geringfügig voneinander abweichenden Positionierbohrungen an zwei miteinander zu verbindenden Teilen deren gegenseitige Lagefixierung und Positionierung erfolgen. Ein lockerer Sitz des Paßelementes in der etwas größeren Bohrung wird vermieden. Da solche Abweichungen von Abmessungen bei Paßbohrungen relativ gering sind, sind diese durch die elastische Aufweitbarkeit der Hülse problemlos zu überbrücken.

Versuche haben gezeigt, daß besonders geringe axiale Kräfte für eine radiale Aufweitung des Paßelementes oder Paßbolzens erforderlich sind, wenn Kugeln als Verdrängungskörper vorgesehen sind. Drei Kugeln ergeben dabei eine besonders stabile Anordnung, die eine genügend gleichmäßige Aufweitung jeweils in der Zone ihrer Anordnung bewirken. Sind mehrere solcher Kugelringe oder Kugelkreise über die Länge des Paßelementes verteilt, kann es im wesentlichen gleichmäßig aufgeweitet werden. Eventuell können auch mehr als drei Kugeln jeweils auf einem derartigen Kreis oder in einer solchen Zone angeordnet sein, wenn eine noch genauere und bessere am Umfang des Paßelementes verteilte Aufweitung erforderlich ist.

Eine besonders einfache Konstruktion ergibt sich, wenn die als Verdrängungskörper dienenden Kugeln in der Hülse zwischen zwei insbesondere im Hülseninneren angeordneten, als Preßkörperdienenden Anschlägen angeordnet sind, von denen wenigstens einer in axialer Richtung verstellbar ist. Somit ist das gesamte Paßelement auch an den Stirnseiten abgeschlossen und gegen Verschmutzungen weitgehend geschützt. Durch eine axiale Verstellung eines der Anschläge werden die im Inneren befindlichen Kugeln an den schon erwähnten Kugelflächen radial nach außen verdrängt und bewirken die gewünschte Aufweitung jeweils in den Zonen des Paßelementes, in denen die einzelnen Kugeln angeordnet sind. Da diese über die gesamte Länge des Paßelementes im wesentlichen gleichmäßig verteilt sind, ergibt sich bei normalen Verhältnissen auch eine gleichmäßige Aufweitung über die gesamte Länge des Paßelementes.

Für eine problemlose axiale Verstellung des Preßkörpers ist es zweckmäßig, wenn wenigstens einer der die Kugeln in axialer Richtung beaufschlagenden und gegen die entsprechend ihrer Beaufschlagung nach außen zurückweichenden Kugelflächen andrückenden Anschläge mittels eines Gewindes und durch Drehung relativ zu der Hülse und/oder relativ zu dem anderen Anschlag in axialer Richtung bewegbar ist. Über Gewinde lassen sich bekannterweise mit relativ geringen Drehmomenten große axiale Preßkräfte und somit eine einfache Aufweitung des Paßelementes an seiner Außenhülse erzielen.

Vorteilhaft ist, daß jede als Verdrängungskörper dienende Verdrängungskugel beidseits von einer zentralen Druck-Kugel beaufschlagt und etwa symmetrisch zwischen solchen zwei Kugeln radial nach außen verdrängt wird, wenn eine axiale Kraft auf diese Kugeln ausgeübt und dabei über die Druck-Kugeln und die Verdränungs-Kugeln jeweils auch über die gesamte Länge des Paßelementes verteilt wird.

Für eine einfache Montage und gleichmäßige Verteilung der Aufweit-Kräfte ist es vorteilhaft, wenn zum Aufnehmen der als Verdrängungskörper dienenden Kugeln ein Käfig vorgesehen ist, der jeweils im Bereich der als Verdrängungskörper dienenden Kugeln einen radialen Durchbruch hat, durch welchen die jeweilige Verdrängungskugel die Innenseite der diesen Käfig mit den Kugeln enthaltenden Hülse des Paßelementes oder ein dünnwandiges Auskleidungsrohr dieser Hülse erreicht. Es entsteht somit ein kompakter Aufweitkörper, der aus dem erwähnten Käfig und den in seinem Inneren angeordneten Verdrängungskörpern besteht und in dieser Form in die als eigentliches Paßelement dienende Hülse eingesetzt werden kann.

Die als Verdrängungskörper dienenden Kugeln können jeweils in axialer Richtung auf Parallelen zu Mantellinien der Hülse liegen und die Durchtritte durch den Käfig können als Langschlitze für jeweils wenigstens zwei in axialer Richtung benachbarte, insbesondere für alle in axialer Richtung benachbarte Verdrängungskugeln ausgebildet sein. Somit wird auch eine geringfügige axiale Verstellung der Verdrängungskugeln bei ihrer Beaufschlagung durch den Preßkörper nicht behindert.

Im übrigen haben die Kugeln als Verdrängungskörper und gegebenenfalls auch als Druckkörper den großen Vorteil, daß sie den erwähnten Bewegungen zum Aufbringen der Preßkraft und ihrer Umsetzung in eine radiale Spreizkraft weniger Widerstand entgegensetzen, weil sie bei eventuellen Verstellbewegungen etwas rollen können, statt ausschließlich Reibkräfte überwinden zu müssen.

Als Preßkörper kann ein mit einem Außengewinde versehener Gewindestift - der etwa die Form einer Madenschraube haben kann - vorgesehen sein, der in ein Innengewinde der Hülse oder des die Kugeln enthaltenden Käfigs eingreift. Da schon eine geringe Umdrehung eines solchen Gewindestiftes durch die Übertragung seiner Längsverschiebung auf die Verdrängungskörper eine Aufweitung der Hülse des Paßelementes bewirkt, kann ein Paßelement geschaffen werden, welches bolzenartig aussieht, weil ein solcher Gewindestift gegenüber der Stirnseite nicht überstehen muß, keinen Kopf benötigt und praktisch bündig mit der Hülse abschließen kann.

Als Gegenanschlag für den Gewindestift kann ein seinerseits über ein Gewinde einschraubbarer Deckel an der dem Gewindestift entgegengesetzten Seite der Hülse oder des Käfigs vorgesehen sein. Dies hat den Vorteil, daß das Innengewinde in der Hülse oder dem Käfig für den Gewindestift und für den Deckel gleich sein kann und eventuell sogar durch die gesamte Hülse oder den gesamten Käfig hindurch verlaufen könnte. Dies erleichtert die Herstellung.

Um zu verhindern, daß ein Benutzer den Gewindestift aus dem Paßelement herausschrauben kann und unter Umständen eine Fehlbedienung durchführt, indem er zwar den Gewindestift verdreht, aber gar keine Verklemmung und Verspannung des Paßelementes in einer Bohrung bewirkt, ist es vorteilhaft, wenn das Gewinde des als Preßkörper dienenden Gewindestiftes mit Abstand zu seiner in Gebrauchsstellung außenliegenden Stirnseite, die insbesondere einen Innenmehrkant oder dergleichen für den Angriff eines Verdrehwerkzeuges aufweisen kann, endet und wenn das Innengewinde der Hülse oder des Käfigs ebenfalls mit einem Abstand von der äußeren Stirnseite endet und in diesem Endbereich die Öffnung des Käfigs oder der Hülse verengt ist, so daß der Gewindestift von der entgegengesetzten Stirnseite her einschraubbar ist, bis er an diesem Bereich als Ausgangslage anschlägt. Aus dieser Anschlaglage kann dann der Gewindestift nur in einer Richtung verdreht werden, nämlich in der Richtung, in welcher er eine Aufweitung des Paßelementes bewirkt. Darüber hinaus wird er unverlierbar und kann nicht versehentlich aus dem Paßelement herausgeschraubt werden.

Weitere Ausgestaltungen der Erfindung sind Gegenstand weiterer Ansprüche.

Anspruch 9 enthält dabei Maßnahmen, die das Aufweiten der Hülse erleichtern, ohne daß diese geschlitzt sein müßte, wie es auch aus Anspruch 12 als Möglichkeit hervorgeht. Darüber hinaus können die an der Außenseite der Hülse eingearbeiteten Wandschwächungen beim Einfügen und Eindrehen des Paßelementes in entsprechende Bohrungen in diesen Bohrungen befindliche Verunreinigungen in sich aufnehmen und so die eigentliche Berührfläche an der Innenseite der Bohrung von Verschmutzungen reinigen, so daß das Paßelement mit seinen entsprechenden Paßflächen eine saubere Anlage findet.

Anspruch 10 enthält eine Möglichkeit, das Aufweiten durch einen Längsschlitz zu erleichtern, der aber trotzdem durch Dichtungsmasse so abgeschlossen sein kann, daß keine Verunreinigungen eindringen können.

Für eine zweite Lösung der vorstehend genannten Aufgabe ist das eingangs erwähnte bolzenförmige Paßelement dadurch gekennzeichnet, daß im Inneren der Hülse axial nebeneinander mehrere als Kugeln ausgebildete Verdrängungskörper angeordnet sind und sich jeweils an wenigstens einer gegenüber einer radialen Querschnittsebene der Hülse unter einem Winkel stehenden Schrägfläche abstützen, deren Schrägung so angeordnet ist, daß sich der von der Berührstelle ausgehende Zwischenraum in radialer Richtung nach außen etwa konisch erweitert, daß die als Verdränungskörper dienenden Kugeln dabei jeweils zwischen schräg sich nach außen erweiternden Randaussparungen von zueinander beabstandeten Ringen angeordnet sind, wobei die mit den an ihrem Außenumfang angeordneten Schrägflächen versehenen Ringe durch die jeweils zwischen zwei solchen Ringen befindlichen Kugeln auf Abstand gehalten sind und die radiale Tiefe der die Schrägflächen aufweisenden Bereiche an den Ringen etwa dem Durchmesser der Kugeln entsprechen oder kleiner sind, und daß wenigstens ein in axialer Richtung wirkender Druck- oder Preßkörper vorgesehen ist, dessen axiale Pressung im Inneren der Hülse an der/den Schrägflächen die axiale Preßkraft in radiale, am Umfang wirkende Druckkräfte umwandelt und aufteilt, und daß die Wandung der Hülse durch die radialen Druckkräfte elastisch zumindest geringfügig aufweitbar ist. Dies ergibt eine andere Möglichkeit, als Verdrängungskörper dienende Kugeln zu beaufschlagen, nämlich mit Hilfe von Ringen, die entsprechende, die Kugeln beaufschlagende Schrägflächen haben.

Eine weitere Möglichkeit, die als Verdrängungskörper dienenden Kugeln unter eine axiale Kraft zu setzen, die zu einer radialen Aufweitung führt, ist in Anspruch 13 enthalten. Anspruch 14 und 15 geben Ausgestaltungen der in Anspruch 13 umschriebenen Anordnung wieder.

Die Maßnahme von Anspruch 16 erlaubt die Verwendung einer Hülse, die auch einen Axialschlitz haben kann, ohne daß beim Verspannen die eventuell auch in Umfangsrichtung im Inneren der Hülse bewegten Kugeln an der durch den Schlitz auftretenden Fuge einrasten oder Geräusche verursachen. Sowohl ein solches die Hülseninnenseite auskleidendes Rohr als auch ein den Schaft einer Spannschraube auskleidendes Rohr können gleichzeitig die Leichtgängigkeit der gesamten Anordnung verbessern, weil die als Verdrängungskörper dienenden Kugeln oder eventuell als Verdrängungskörper dienende Rollen daran besser gleiten und rollen können, als unmittelbar an einem Schraubschaft oder einer Hülseninnenwand.

Insgesamt ergibt sich ein bolzenförmiges Paßelement, bei welchem Kugeln als Verdrängungskörper über die Länge des Paßelementes und seiner Außenhülse verteilt im Inneren angeordnet sind, die in den einzelnen Zonen, in denen sie sich befinden, eine Axialkraft in eine radiale Aufweitung umwandeln können, so daß ein Paßelement, welches in einer engeren Bohrung verspannt wird, außerhalb dieser engen Bohrung gleichzeitig noch mit einer etwas größeren Bohrung verspannt werden kann. Es wird verhindert, daß das Paßelement durch die engere Bohrung blockiert wird und dann außerhalb dieser engeren Bohrung keine feste Anlage an einer etwas größeren Bohrung mehr ermöglicht.

Nachstehend sind Ausführungsbeispiele der Erfindung anhand der Zeichnung näher beschrieben. Es zeigt in zum Teil schematisierter Darstellung:
- Fig.1: eine teils im Längsschnitt, teils in Seitenansicht dargestellte Ausführungsform eines erfindungsgemäßen Paßelementes, in dessen Innerem als Verdrängungskörper Kugeln und für deren Verdrängung ebenfalls Kugeln vorgesehen sind,
- Fig.2: eine Stirnansicht des Paßelementes gem. Fig.1,
- Fig.3: eine teilweise im Längsschnitt gehaltene Ansicht eines Korbes, der die als Verdrängungskörper dienenden Kugeln umfaßt und in einer äußeren Hülse des Paßelementes angeordnet ist,
- Fig.4: einen Querschnitt des Paßelementes gem. Fig.1 bis 3,
- Fig.5: eine auseinandergezogene Explosions-Darstellung des Paßelementes gem. den Figuren 1 bis 4 mit einer äußeren Hülse, einem Korb, dem Kugelpaket mit den als Verdrängungskörpern dienenden Kugeln und den für deren Verdrängung erforderlichen Kugeln sowie den stirnseitigen Abschlüssen,
- Fig.6: einen Längsschnitt durch eine abgewandelte Ausführungsform, bei welcher ebenfalls Kugeln als Verdrängungskörper und zur Bewirkung der Verdrängung vorgesehen sind, wobei jedoch kein Käfig für die Kugeln vorgesehen ist und die Verdrängung mit Hilfe einer durchgehenden, einen Schaft aufweisenden Schraube erfolgt, sowie
- Fig.7: eine der Fig.6 ähnliche Anordnung, bei welcher als Verdrängungskörper Kugeln in axialer Richtung über die Länge der Hülse des Paßelementes verteilt sind, zur Bewirkung der Verdrängung jedoch Ringe mit die Kugeln beaufschlagenden Schrägflächen vorgesehen sind.

In den verschiedenen Ausführungsbeispielen sind übereinstimmende Teile auch bei andersartiger Gestaltung mit übereinstimmenden Bezugszahlen versehen.

Ein im ganzen mit 1 bezeichnetes bolzenförmiges Paßelement dient zum Fixieren, Zentrieren und/oder Positionieren von Paßbohrungen aufweisenden Teilen, zum Beispiel von aufeinanderliegenden Platten, die übereinstimmende Paßbohrungen haben. Ferner kann das Paßelement beispielsweise zum Positionieren und Fixieren eines Schraubstockes auf einer entsprechenden Unterlage dienen, wobei dann sowohl die Unterlage als auch der Schraubstock übereinstimmende Paßbohrungen aufweisen können.

Das bolzenförmige Paßelement 1 hat eine die Paßoberfläche aufweisende äußere Buchse oder Hülse 2, in deren Innerem Verdrängungskörper 3 vorgesehen sind, die durch eine noch zu beschreibende axiale Verstellung die radiale Außenabmessung des Paßelementes 1 bzw. der Hülse 2 vergrößern.

Dabei erkennt man in allen Ausführungsbeispielen, daß im Inneren der Hülse 2 axial nebeneinander mehrere Verdrängungskörper angeordnet sind, das heißt es sind über die Länge des Paßelementes 1 einander benachbarte, voneinander jedoch weitgehend unabhängige Zonen geschaffen, in denen jeweils der Umfang des Paßelementes 1 bzw. der Hülse 2 vergrößert werden kann. Dadurch kann erreicht werden, daß das Paßelement 1 in eine Paßbohrung eingesetzt und in dieser verspannt wird und gleichzeitig eine in axialer Richtung benachbarte Paßbohrung festlegen kann bzw. in dieser ebenfalls verspannt werden kann, selbst wenn die beiden Paßbohrungen aufgrund der zugelassenen Toleranzen geringfügig abweichende Abmessungen haben. Es wird also verhindert, daß das Paßelement 1 in einer etwas engeren Bohrung blockiert wird und dann die zweite Paßbohrung nicht mehr genau justiert und fixiert werden kann.

Die in axialer Richtung nebeneinanderliegenden und gleichmäßig am Innenumfang der Hülse 2 angeordneten Verdrängungskörper 3 stützen sich jeweils an einer gegenüber einer radialen Querschnittsebene der Hülse 2 unter einem Winkel stehenden Schrägfläche ab, deren Schrägung so angeordnet ist, daß sich der zwischen ihr und dem jeweiligen Verdrängungskörper 3 oder einer durch den Verdrängungskörper 3 verlaufenden Querschnittsebene befindliche Zwischenraum 4 oder Abstand in radialer Richtung nach außen etwa konisch erweitert. Ferner ist bei allen Ausführungsbeispielen wenigstens ein in axialer Richtung wirkender Druck- oder Preßkörper 5 vorgesehen, dessen axiale Pressung im Inneren der Hülse 2 an den Schrägflächen die axiale Preßkraft in radiale, am Umfang wirkende Druckkräfte umwandelt und aufteilt. Die Wandung der Hülse 2 ist durch diese radialen Druckkräfte elastisch zumindest geringfügig aufweitbar, so daß sich bei einer entsprechenden Pressung durch den Preßkörper 5 die gewünschte Erweiterung in den einzelnen Aufweitungszonen, in denen Verdrängungskörper 3 angeordnet sind, ergeben. Durch die erwähnte axiale Pressung werden nämlich die Zwischenräume 4 in ihrer axialen Ausdehnung verringert, so daß die an diesen Zwischenräumen 4 sich radial nach außen erweiternden Bereiche die Verdrängungskörper 3 in radialer Richtung nach außen verdrängen und so die jeweilige Aufweitung des Bereiches bewirken, in dem ein solcher Verdrängungskörper 3 an der Innenseite der Hülse 2 mittelbar oder mittelbar ansteht.

In den dargestellten Ausführungsbeispielen sind die Verdrängungskörper 3 in der Hülse 2 zwischen zwei insbesondere im Hülseninneren befindlichen, als Preßkörper 5 dienenden Anschlägen angeordnet, von denen wenigstens einer in axialer Richtung verstellbar ist. Für eine besonders gute Bedienbarkeit, die ein Benutzer auch vom Anziehen einer Schraube her kennt, ist wenigstens einer der die Verdrängungskörper 3 in axialer Richtung beaufschlagenden und gegen die entsprechend dieser Beaufschlagung nach außen zurückweichenden Schrägflächen andrückenden Anschläge oder Preßkörper 5 mittels eines Gewindes und durch Drehung relativ zu der Hülse 2 und auch relativ zu dem anderen Anschlag in axialer Richtung bewegbar. Dies ergibt nicht nur die erwähnte bedienungsfreundliche Handhabung, sondern läßt auch die Übertragung hoher axialer Preßkräfte zum Umsetzen in eine entsprechende radiale Aufweitung der Hülse 2 zu.

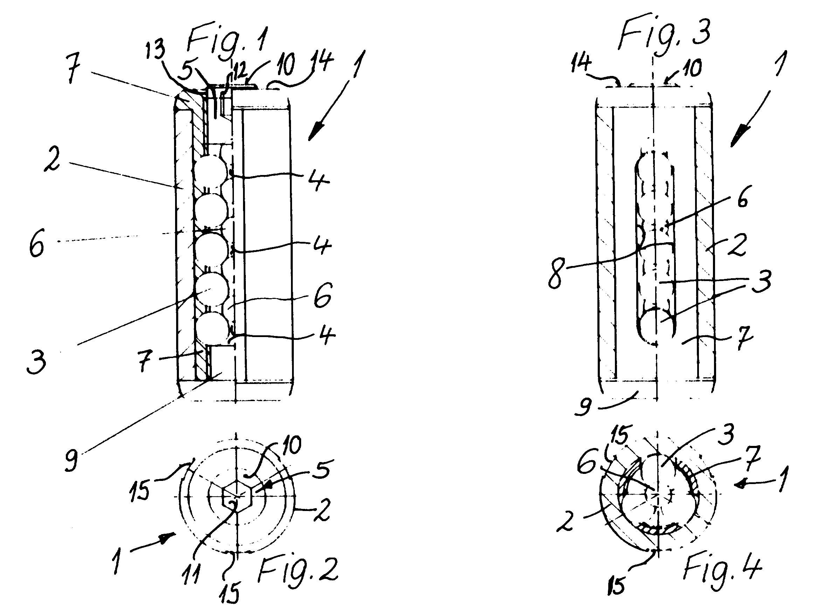

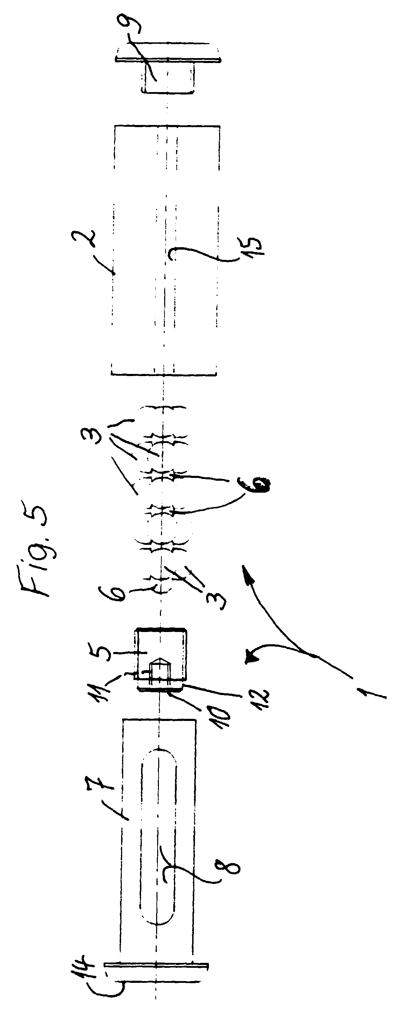

In allen Ausführungsbeispielen sind als Verdrängungskörper 3 Kugeln vorgesehen, jedoch wären auch bei bestimmten Ausgestaltungen sonstige Verdrängungskörper wie zum Beispiel Walzen eventuell mit balliger Oberfläche oder dergleichen denkbar oder möglich. Kugeln haben jedoch den Vorteil einer allseitigen Symmetrie und können bei Verstellbewegungen etwas rollen, also die Reibung vermindern. Um die schon erwähnten einzelnen in axialer Richtung einander benachbarten Aufweitungszonen an der Hülse 2 zu erlangen, sind die als Verdrängungskörper 3 dienenden Kugeln jeweils mit ihrer Durchmesserebene etwa in einer Querschnittsebene des Paßelementes 1 und mit ihren Mittelpunkten auf einem etwa konzentrisch zu der Mittelachse des Paßelementes 1 liegenden Kreis angeordnet. Sie beaufschlagen jeweils die Innenseite der Hülse 2 unmittelbar oder gegebenenfalls auch nur mittelbar, wenn nämlich zur Verminderung der Reibung an der Innenseite der Hülse 2 noch ein dünnes Rohr als Rollfläche angeordnet ist. Dabei ist im Ausführungsbeispiel gemäß Fig.1 bis 5 vorgesehen, daß drei Kugeln jeweils auf einem Querschnitt angeordnet sind, was eine relativ stabile Anordnung bedeutet. Vor allem Fig.5 verdeutlicht dabei, wie in axialer Richtung mehrere aus wenigstens drei Kugeln gebildete Zonen bei diesem Ausführungsbeispiel vorgesehen sind und ferner wird dabei deutlich, daß das Paßelement 1 in diesem Ausführungsbeispiel über seine axiale Erstreckung eine gleichbleibende Außenabmessung und die auf parallelen Kreisen oder Querschnittsebenen angeordneten mehreren Kugeln jeweils gleich groß sind. Denkbar wäre auch ein etwas konisch ausgebildetes Paßelement 1, bei welchem dann beispielsweise die Kugeldurchmesser der in axialer Richtung nebeneinander befindlichen Verdrängungskörper 3 zu- bzw. abnehmen.

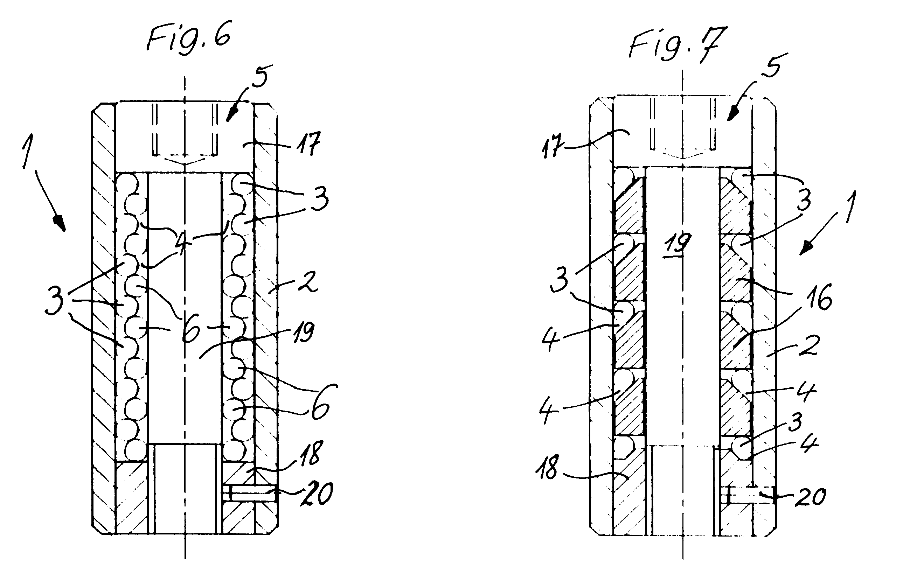

In den beiden Ausführungsbeispielen gemäß den Figuren 1 bis 5 und in Fig.6 sind als Schrägflächen zum radialen Verstellen der als Verdrängungskörper 3 dienenden Kugeln nach außen konvex gekrümmte Flächen, nämlich Kugelflächen vorgesehen, die dabei zu Kugeln 6 gehören, welche in radialer Richtung näher zur Mittelachse des Paßelementes 1 angeordnet sind, als die Mittelpunkte der als Verdrängungskörper 3 dienenden Kugeln.

Beim Ausführungsbeispiel nach Fig.1 bis 5 sind dabei die Schrägflächen an in axialer Richtung nebeneinander in der Mitte des Paßelementes 1 angeordneten Kugeln 6 vorgesehen, die jeweils einen Abstand zueinander haben, der auch den Zwischenraum 4 bildet und der kleiner als der Durchmesser der als Verdrängungskörper 3 dienenden Kugeln ist, so daß diese nur mit einem kleineren Bereich ihres Volumens zwischen diese Preß-Kugeln 6 eingreifen können. Umgekehrt sind also in dem sich radial nach außen erweiternden Abstand dieser in axialer Richtung nebeneinanderliegenden zentralen Preß-Kugeln 6 die Verdrängungskugeln 3 angeordnet. Werden nun durch eine axiale Preßkraft die zentralen Kugeln 6 aufeinanderzubewegt, werden die in die Zwischenräume 4 zwischen diesen Kugeln 6 seitlich eingreifenden Kugeln 3 radial nach außen bewegt und verdrängt.

Sowohl für die Montage als auch für eine Beibehaltung der definierten Verdrängungszonen über die Länge des Paßelementes 1 ist beim Ausführungsbeispiel gemäß den Figuren 1 bis 5 in zweckmäßiger Weise zum Aufnehmen der Kugeln 3 und 6 ein Käfig 7 vorgesehen, der jeweils im Bereich der als Verdrängungskörper 3 dienenden Kugeln einen radialen Durchbruch 8 hat, durch welchen diese Verdrängungskugeln 3 die Innenseite der diesen Käfig 7 enthaltenden und umschließenden Hülse 2 oder eines eventuell dort noch befindlichen dünnwandigen Auskleidungsrohres erreichen.

Wenn dabei die als Verdrängungskörper 3 dienenden Kugeln jeweils gemäß dem dargestellten Ausführungsbeispiel in axialer Richtung auf Parallelen zu Mantellinien der Hülse 2 liegen, können die Durchtritte 8 durch den Käfigmantel als Langschlitze für jeweils zum Beispiel wenigstens zwei, im Ausführungsbeispiel alle in axialer Richtung benachbarte, als Verdrängungskörper 3 dienende Kugeln ausgebildet sein. Es sind dann also am Umfang des Käfigs 7 beispielsweise drei derartige Langschlitze als Durchbrüche 8 vorhanden.

Das recht günstige Ausführungsbeispiel gemäß den Figuren 1 bis 5 zeigt ferner, daß als Preßkörper 5 ein mit einem Außengewinde versehener Gewindestift etwa in Form einer Madenschraube vorgesehen sein kann, der in ein Innengewinde der Hülse 2 oder - gemäß dem vorliegenden Ausführungsbeispiel - des die Kugeln enthaltenden Käfigs 7 eingreift. Somit kann der Innenraum der Hülse 2 bzw. des Käfigs 7 vollständig mit den Kugeln 3 und 6 ausgefüllt werden.

Als Gegenanschlag für den Gewindestift ist in diesem Ausführungsbeispiel gemäß den Figuren 1 bis 5 ein seinerseits über ein Gewinde einschraubbarer Deckel 9 an der dem Gewindestift entgegengesetzten Seite der Hülse 2 oder des Käfigs 7 vorgesehen. Somit kann die Hülse 2 an ihrem einen stirnseitigen Ende durch diesen Deckel 9 fest verschlossen werden, der ein Widerlager bildet, wenn der als Preßkörper 5 dienende Gewindestift tiefer in die Hülse 2 eingeschraubt wird und dabei dann die Kugeln radial nach außen verdrängt. Vor allem in Fig.1 in Verbindung mit Fig.5 erkennt man, daß das Gewinde des als Preßkörper 5 dienenden Gewindestiftes mit Abstand zu seiner in Gebrauchsstellung außenliegenden Stirnseite 10, die im Ausführungsbeispiel einen Innenmehrkant 11 für den Angriff eines Verdrehwerkzeuges aufweist, endet und einen etwa dem Kerndurchmesser des Gewindes entsprechenden Auslauf 12 hat. In diesem Bereich hat also der Preßkörper 5 einen verminderten Außenquerschnitt. Ferner erkennt man, daß das Innengewinde der Hülse 2 bzw. im Ausführungsbeispiel das Innengewinde des Käfigs 7, in welches dieser Preßkörper 5 eingeschraubt wird, ebenfalls mit einem Abstand 13 von der äußeren Stirnseite 14 endet und in diesem Bereich die Öffnung des Käfigs 7 - oder der Hülse 2 - verengt ist. Dadurch wird erreicht, daß der Gewindestift von der entgegengesetzten Stirnseite her einschraubbar ist, bis er an diesem Bereich als Ausgangslage anschlägt, wobei sein Auslauf 12 mit dem verengten Durchtrittsbereich gemäß dem Abstand 13 in Übereinstimmung gelangt. Es ist aber dadurch verhindert, daß der Gewindestift weiter aus der Stirnseite 14 herausgeschraubt werden kann. Ein Benutzer kann also nur in der Richtung eine Schraubbewegung durchführen, in welcher dieser Gewindestift als Preßkörper 5 die gewünschte axiale Preßkraft erzeugt. Ein Herausschrauben und Verlieren von Teilen aus dem Inneren des Paßelementes 1 wird also verhindert.

Gemäß Fig.2, 4 und 5 weist die Hülse 2 an ihrer Außenseite eingearbeitete Wandschwächungen 15 auf, die etwa nutenförmig über die Gesamtlänge der Hülse 2 verlaufen. Denkbar wäre eine analoge Wandschwächung auch an der Innenseite der Hülse 2, um nämlich ihre Aufweitung zu erleichtern. Die außenseitigen Wandschwächungen haben jedoch den Vorteil, daß sie beim Einfügen in eine Paßbohrung dort vorhandene Verunreinigungen in sich aufnehmen können, also für eine gute Anlage der Paßflächen gesorgt wird. Dabei erkennt man vor allem in Fig.4, daß die Verdrängungskörper 3 in dem Bereich der Hülse 2 im Inneren angreifen, der ungeschwächt ist. Somit wird die von diesen Verdrängungskörpern 3 ausgehende Aufweit-Kraft auf entsprechend stabile Hülsenabschnitte übertragen, die auch unmittelbar zur Anlage an einer Gegenfläche kommen sollen und eine entsprechende Verklemmung bewirken.

Die Wandschwächungen 15 können das Aufweiten der ihnen benachbarten dickeren Zonen der Hülse 2 erleichtern. Es ist aber auch möglich, daß die Hülse wenigstens einen ihrer Aufweitung in den einzelnen axial nebeneinanderliegenden, Verdrängungskörper 3 aufweisenden Zonen erleichternden Längsschlitz hat, der eventuell durch einen elastischen Dichtungswerkstoff ausgefüllt und verschlossen sein kann. Im Ausführungsbeispiel ist allerdings die Hülse 2 ungeschlitzt und allseits durchgehend ausgebildet, was dadurch möglich ist, daß sie aus einem etwas elastischen nachgiebigen Werkstoff besteht, der die erforderliche Aufweitung um die Bruchteile von Millimetern gestattet, die zum Festlegen in einer Paßbohrung erforderlich sind. Die Aufweitung wird jedoch leichtgängiger, wenn wenigstens ein entsprechender Längsschlitz an der Hülse 2 vorgesehen ist.

In jedem Falle ist es günstig, wenn die Außenhülse 2 aus elastisch nachgiebigem Metall, vorzugsweise Stahl, oder aus insbesondere hartem Kunststoff besteht und dadurch neben der Möglichkeit, eine geschlitzte Hülse 2 einzusetzen auch erlaubt, eine durchgehend in Umfangsrichtung und in axialer Richtung geschlossene Hülse 2 zu verwenden, die entsprechend besser gegen das Eindringen von Verunreinigungen geschützt ist. Eine solche Sicherung gegen eindringende Verunreinigungen kann jedoch auch mit dem schon erwähnten elastischen Dichtungswerkstoff erreicht werden, mit dem ein Längsschlitz ausgefüllt sein kann.

In Fig.7 ist ein Ausführungsbeispiel dargestellt, bei welchem die als Verdrängungskörper 3 dienenden Kugeln jeweils zwischen schräg sich nach außen erweiternden Randaussparungen 4 von zueinander beabstandeten Ringen 16 angeordnet sind. Die mit den an ihrem Außenumfang angeordneten Schrägflächen versehenen Ringe 16 werden dabei gemäß Fig.7 durch die jeweils zwischen zwei solchen Ringen 16 befindlichen, als Kugeln ausgebildeten Verdrängungskörpern 3 auf Abstand gehalten, wobei die radiale Tiefe der die Schrägflächen aufweisenden Bereiche 4 an den Ringen und die Schrägung so gewählt sind, daß die Kugeln in Ausgangsstellung mit ihren äußeren Zonen dem Ringdurchmesser entsprechend angeordnet sind oder etwas weiter innen liegen. Wird nun eine Axialkraft aufgebracht, die die Ringe 16 einander annähert, werden die Kugeln an den Schrägflächen nach außen verdrängt, treten also aus dem Ringdurchmesser hervor und bewirken durch ihre Berührung mit der Innenseite der Hülse 2 oder eines dort befindlichen Auskleidungsrohres das gewünschte und vorbeschriebene Aufweiten der Hülse in der jeweiligen Zone ihrer axialen Erstreckung, in welcher solche Kugeln als Verdrängungskörper 3 angeordnet sind.

Im Ausführungsbeispiel sind die Schrägflächen jeweils nur an einer Seite eines solchen Ringes 16 vorgesehen, jedoch könnten auch symmetrische Zwischenräume 4 geschaffen werden, wenn die Ringe jeweils beidseits mit solchen Schrägflächen versehen wären.

Während beim Ausführungsbeispiel gemäß den Figuren 1 bis 5 im Zentrum des Paßelementes 1 axial nebeneinander mit Abstand Kugeln vorgesehen sind, die durch ihre axiale Annäherung aufgrund der axialen Preßkraft des Preßkörpers 3 die radial weiter außenliegenden Kugeln nach außen verdrängen und so als Verdrängungskörper 3 wirksam machen und der Preßkörper 5 ein Gewindestift ist, ist beim Ausführungsbeispiel gemäß den Figuren 6 und 7 eine Abwandlung dahingehend vorgesehen, daß die die Verdrängungskörper 3 von beiden Seiten beaufschlagenden Anschlägen durch eine Schraube mit einem Kopf 17 als der eine Anschlag und einer davon beabstandeten Mutter 18 als der zweite Anschlag sowie einem dazwischen verlaufenden Schaft 19 gebildet sind, wobei einer der Anschläge innerhalb der Hülse 2 zumindest gegen Verdrehung, insbesondere auch in axialer Richtung gesichert und festgelegt ist und der andere Anschlag in axialer Richtung durch die Verschraubung verschiebbar ist. Man erkennt in beiden Figuren, daß dabei die Mutter 18 durch einen Querstift 20 in Drehrichtung und in axialer Richtung fixiert ist, welcher Querstift 20 sowohl die Hülsenwandung als auch einen Teil dieser Mutter 18 durchsetzt. Die Verdrängungskörper 3 sind dabei zwischen dem Schaft 19 der Schraube oder einem diesen eventuell umschließenden Rohr und der Hülse 2 angeordnet. In beiden Ausführungsbeispielen sind dabei diese Verdrängungskörper 3 wiederum Kugeln.

Bei der Anordnung gemäß Fig.6 ist der zwischen der Innenseite der Hülse 2 und dem Schaft 19 der Schraube vorgesehene Zwischenraum größer als der Durchmesser der als Verdrängungskörper 3 dienenden Kugeln, aber kleiner als der doppelte Durchmesser der Kugeln und in diesem Zwischenraum befinden sich nun jeweils Kugeln in Querschnittsebenen des Paßelementes übereinandergeschichtet, die abwechselnd einerseits die Innenseite der Hülse 2 und andererseits den Schaft 19 oder das diesen umschließende Rohr berühren, so daß bei einem Einschrauben des Schraubenschaftes 19 mit seinem Gewinde in die Mutter 18 diese Kugeln sich gegenseitig verdrängen, wobei aber nur die radial außenliegenden Kugeln ausweichen können, indem sie die Hülse 2 jeweils in ihrem Durchmesserbereich aufweiten.

Beim Ausführungsbeispiel gemäß Fig.7 sind auf den Schaft 19 die schon erwähnten und beschriebenen Ringe 16 aufgefädelt, die an ihren äußeren Umfangsbereichen die erwähnten Schrägflächen haben, an welchen die als Verdrängungskörper 3 dienenden Kugeln gehalten sind. Auch dadurch kann eine Aufweitung der Hülse jeweils in einzelnen axial nebeneinanderliegenden Zonen und somit über die gesamte Länge des Paßelementes 1 erfolgen, so daß auch bei diesen Ausführungsformen gemäß Fig.6 und 7 das Paßelement auch zwei Paßbohrungen klemmend durchsetzen kann, die geringfügige Durchmesserabweichungen haben.

Es sei noch erwähnt, daß zwischen der insbesondere geschlitzten Hülse 2 und den Kugeln 3 ein dünnwandiges Rohr, vorzugsweise aus Metall, als Rollfläche für die Kugeln beim Spannen, angeordnet sein könnte, welches dicht an der Hülseninnenwand anliegt und die Spannkräfte auf die Hülse überträgt. Dadurch kann das Rollen der Kugeln 3 bei der Verspannung begünstigt werden.

Insgesamt ergibt sich ein Paßelement 1, bei welchem das Eindringen von Schmutz praktisch ausgeschlossen ist, welches aber dennoch eine präzise Justierung und Fixierung an Paßbohrungen erlaubt. Gegebenenfalls könnte dabei das Paßelement 1 auch eine insgesamt konische Form haben, wenn nämlich die Verdrängungskörper in axialer Richtung auf immer größeren Durchmessern und Kreisen liegen oder ihrerseits zunehmende Abmessungen haben. Vor allem wird jedoch erreicht, daß ein solches Paßelement 1 nicht durch eine Paßbohrung an einer weiteren Aufweitung außerhalb dieser Paßbohrung gehindert wird, wenn es in dieser ersten Paßbohrung festgeklemmt ist. Somit können auch geringfügig in ihren Abmessungen abweichende Paßbohrungen von diesem Paßelement 1 gemeinsam erfaßt werden, das heißt es kann auch ein Schraubstock paßgenau auf einer Platte fixiert werden, wenn dessen Paßbohrung und die der Unterlage in ihren Abmessungen geringfügig abweichen. Somit können auch Kosten dadurch gespart werden, daß etwas weniger genaue Toleranzen zugelassen werden könnten.

Das bolzenförmige Paßelement 1 dient zum Fixieren, Zentrieren und/oder Positionieren von Paßbohrungen aufweisenden Teilen, wobei die Paßbohrungen in ihren Abmessungen geringfügig, beispielsweise mehrere tausendstel oder gegebenenfalls sogar hundertstel Millimeter voneinander abweichen können und dennoch von dem Paßelement 1 jeweils klemmend erfaßt werden. Dies wird dadurch erreicht, daß im Inneren zu dem Paßelement 1 gehörenden Hülse 2 axial nebeneinander Verdrängungskörper 3 angeordnet sind und sich jeweils an wenigstens einer gegenüber einer radialen Querschnittsebene der Hülse 2 unter einem Winkel stehenden Schrägflächen, die auch ballig oder kugelig sein können, abstützen. Die Schrägung ist dabei so gewählt, daß sich der zwischen ihr und dem jeweiligen Verdrängungskörper 3 oder einer durch den Verdrängungskörper 3 verlaufenden Querschnittsebene befindliche Zwischenraum 4 oder Abstand in radialer Richtung nach außen erweitert. Wenigstens ein in axialer Richtung wirkender Druck- oder Preßkörper 5 kann durch axiale Pressung im Inneren der Hülse 2 an den Schrägflächen diese axiale Preßkraft in radiale, am Umfang wirkende Druckkräfte umwandeln und aufteilen und zwar über die erwähnten Verdrängungskörper 3. Die Wandung der Hülse 2 ist durch diese radialen Druckkräfte elastisch zumindest geringfügig aufweitbar, so daß jeweils im Bereich solcher Verdrängungskörper 3, also in den axial nebeneinanderliegenden Bereichen dieser Verdrängungskörper 3 entsprechende Aufweitungen stattfinden, also auch eine Anpassung an nebeneinanderliegende Paßbohrungen etwas abweichender Durchmesser möglich ist.

## Patentansprüche

1. Bolzenförmiges Paßelement (1) zum Fixieren, Zentrieren und/oder Positionieren von Paßbohrungen aufweisenden Teilen, insbesondere von aufeinanderliegenden Platten oder dergleichen, mit einer die Paßoberfläche aufweisenden äußeren Buchse oder Hülse (2), in deren Innerem Verdrängungskörper (3) vorgesehen sind, die durch axiale Verstellung die radiale Außenabmessung des Paßelementes (1) innerhalb der Paßbohrungen vergrößern, dadurch gekennzeichnet, daß als Verdrängungskörper (3) im Inneren der Hülse (2) jeweils in einer Querschnittsebene des Paßelementes (1) wenigstens drei Kugeln angeordnet sind, die mit ihren Mittelpunkten auf einem konzentrisch zu der Mittelachse des Paßelementes (1) liegenden Kreis angeordnet sind und jeweils die Innenseite der Hülse (2) mittelbar oder unmittelbar beaufschlagen, daß sich diese Verdrängungskörper (3) jeweils an wenigstens einer gegenüber einer radialen Querschnittsebene unter einem Winkel stehenden Kugelfläche abstützen, deren Fläche so angeordnet ist, daß sich der von der Berührstelle ausgehende Zwischenraum (4) in radialer Richtung nach außen etwa konisch erweitert, daß in axialer Richtung mehrere aus wenigstens drei Kugeln gebildete Zonen vorgesehen sind, daß das Paßelement (1) über seine axiale Erstreckung eine gleichbleibende Außenabmessung hat und die auf parallelen Kreisen oder Querschnittsebenen angeordneten mehreren Kugeln jeweils gleich groß sind, daß die zum radialen Verstellen der Kugeln nach außen dienenden Kugelflächen zu Kugeln (6) gehören, die in axialer Richtung nebeneinander in der Mitte des Paßelementes (1) angeordnet sind und jeweils einen Abstand zueinander haben, der kleiner als der Durchmesser der als Verdrängungskörper (3) dienenden Kugeln ist, wobei jeweils in dem sich radial nach außen erweiternden Abstand der in axialer Richtung nebeneinanderliegenden zentralen Kugeln (6) die Verdrängungskugeln (3) angeordnet sind, und daß wenigstens ein in axialer Richtung wirkender Druck- oder Preßkörper (5) vorgesehen ist, dessen axiale Pressung im Inneren der Hülse (2) an den Kugelflächen die axiale Preßkraft in radiale, am Umfang wirkende Druckkräfte umwandelt und aufteilt und daß die Wandung der Hülse (2) durch die radialen Druckkräfte elastisch zumindest geringfügig aufweitbar ist.

2. Paßelement nach Anspruch 1, dadurch gekennzeichnet, daß die als Verdrängungskörper (3) dienenden Kugeln in der Hülse (2) zwischen zwei insbesondere im Hülseninneren befindlichen, als Preßkörper (5) dienenden Anschlägen angeordnet sind, von denen wenigstens einer in axialer Richtung verstellbar ist.

3. Paßelement nach Anspruch 1 oder 2, dadurch gekennzeichnet, daß wenigstens einer der die Kugeln (3) in axialer Richtung beaufschlagenden und gegen die entsprechend dieser Beaufschlagung nach außen zurückweichenden Kügelflächen andrückenden Anschläge oder Preßkörper (5) mittels eines Gewindes und durch Drehung relativ zu der Hülse (2) und/oder relativ zu dem anderen Anschlag in axialer Richtung bewegbar ist.

4. Paßelement nach einem der Ansprüche 1 bis 3, dadurch gekennzeichnet, daß zum Aufnehmen der als Verdrängungskörper dienenden Kugeln (3) ein Käfig (7) vorgesehen ist, der jeweils im Bereich der als Verdrängungskörper (3) dienenden Kugeln einen radialen Durchbruch (8) hat, durch welchen die jeweilige Verdrängungskugel (3) die Innenseite der diesen Käfig (7) mit den Kugeln enthaltenden Hülse (2) des Paßelementes oder ein dünnwandiges Auskleidungsrohr dieser Hülse erreicht.

5. Paßelement nach einem der Ansprüche 1 bis 4, dadurch gekennzeichnet, daß die als Verdrängungskörper (3) dienenden Kugeln jeweils in axialer Richtung auf Parallelen zu Mantellinien liegen und die Durchtritte (8) durch den Käfigmantel als Langschlitze für jeweils wenigstens zwei in axialer Richtung benachbarte, insbesondere für alle in axialer Richtung benachbarte Verdrängungs-KugeIn (3) ausgebildet sind.

6. Paßelement nach einem der Ansprüche 1 bis 5, dadurch gekennzeichnet, daß als Preßkörper (5) ein mit einem Außengewinde versehener Gewindestift vorgesehen ist, der in ein Innengewinde der Hülse (2) oder des die Kugeln enthaltenden Käfigs (7) eingreift.

7. Paßelement nach einem der Ansprüche 1 bis 6, dadurch gekennzeichnet, daß als Gegenanschlag für den Gewindestift ein seinerseits über ein Gewinde einschraubbarer Deckel (9) an der dem Gewindestift entgegengesetzten Seite der Hülse (2) oder des Käfigs (7) vorgesehen ist.

8. Paßelement nach einem der Ansprüche 1 bis 7, dadurch gekennzeichnet, daß das Gewinde des als Preßkörper (5) dienenden Gewindestiftes mit Abstand zu seiner in Gebrauchsstellung außenliegenden Stirnseite (10), die insbesondere einen Innenmehrkant (11) oder dergleichen für den Angriff eines Verdrehwerkzeuges aufweist, endet und daß das Innengewinde der Hülse (2) oder des Käfigs (7) ebenfalls mit einem Abstand (13) von der äußeren Stirnseite (14) endet und in diesem Bereich die Öffnung des Käfigs (7) oder der Hülse (2) verengt ist, so daß der Gewindestift von der entgegengesetzten Stirnseite her einschraubbar ist, bis er an diesem Bereich als Ausgangslage anschlägt.

9. Paßelement nach einem der Ansprüche 1 bis 8, dadurch gekennzeichnet, daß die Hülse (2) an ihrer Innenseite und/oder an ihrer Außenseite eingearbeitete Wandschwächungen (15) aufweist, wobei die Verdrängungskörper (3) in dem Bereich dieser Hülse (2) im Inneren angreifen, der zumindest an der Außenseite des Paßelementes oder der Hülse ungeschwächt ist.

10. Paßelement nach einem der Ansprüche 1 bis 9, dadurch gekennzeichnet, daß die Hülse wenigstens einen ihre Aufweitung in den einzelnen axial nebeneinanderliegenden, Verdrängungskörper (3) aufweisenden Zonen erleichternden Längsschlitz hat, der vorzugsweise durch einen elastischen Dichtungswerkstoff ausgefüllt und verschlossen ist.

11. Paßelement nach Oberbegriff des Patentanspruches 1, dadurch gekennzeichnet, daß im Inneren der Hülse (2) axial nebeneinander mehrere als Kugeln ausgebildete Verdrängungskörper (3) angeordnet sind und sich jeweils an wenigstens einer gegenüber einer radialen Querschnittsebene der Hülse (2) unter einem Winkel stehenden Schrägfläche abstützen, deren Schrägung so angeordnet ist, daß sich der von der Berührstelle ausgehende Zwischenraum (4) in radialer Richtung nach außen etwa konisch erweitert, daß die als Verdrängungskörper (3) dienenden Kugeln dabei jeweils zwischen schräg sich nach außen erweiternden Randaussparungen (4) von zueinander beabstandeten Ringen (16) angeordnet sind, wobei die mit den an ihrem Außenumfang angeordneten Schrägflächen versehenen Ringe (16) durch die jeweils zwischen zwei solchen Ringen (16) befindlichen Kugeln auf Abstand gehalten sind und die radiale Tiefe der die Schrägflächen aufweisenden Bereiche (4) an den Ringen (16) etwa dem Durchmesser der Kugeln entsprechen oder kleiner sind, und daß wenigstens ein in axialer Richtung wirkender Druck- oder Preßkörper (5) vorgesehen ist, dessen axiale Pressung im Inneren der Hülse (2) an der/den Schrägflächen die axiale Preßkraft in radiale, am Umfang wirkende Druckkräfte umwandelt und aufteilt, und daß die Wandung der Hülse (2) durch die radialen Druckkräfte elastisch zumindest geringfügig aufweitbar ist.

12. Paßelement nach einem der vorstehenden Ansprüche, dadurch gekennzeichnet, daß die Außenhülse (2) aus elastisch nachgiebigem Metall, vorzugsweise Stahl, oder aus insbesondere hartem Kunststoff besteht und insbesondere in axialer und in Umfangsrichtung durchgehend geschlossen ist.

13. Paßelement nach einem der Ansprüche 1 bis 12, dadurch gekennzeichnet, daß die die Verdrängungskörper (3) von beiden Seiten beaufschlagenden Anschläge durch eine Schraube mit einem Kopf (17) als der eine Anschlag und einer davon beabstandeten Mutter (18) als der zweite Anschlag gebildet sind, wobei vorzugsweise einer der Anschläge innerhalb der Hülse (2) zumindest gegen Verdrehung, insbesondere auch in axialer Richtung gesichert und festgelegt ist und der andere Anschlag in axialer Richtung durch die Verschraubung verschiebbar ist.

14. Paßelement nach Anspruch 13, dadurch gekennzeichnet, daß die Verdrängungskörper (3) zwischen dem Schaft (19) der Schraube oder einem diesen umschließenden Rohr und der Hülse (2) angeordnet, insbesondere als Kugeln oder dergleichen ausgebildet sind.

15. Paßelement nach einem der Ansprüche 1 bis 14, dadurch gekennzeichnet, daß der zwischen der Innenseite der Hülse (2) und dem Schaft (19) vorgesehene Zwischenraum größer ist als der Durchmesser der als Verdrängungskörper (3) dienenden Kugeln, aber kleiner als der doppelte Durchmesser der Kugeln ist und daß in dem Zwischenraum jeweils Kugeln in Querschnittsebenen des Paßelementes (1) übereinandergeschichtet sind, die abwechselnd einerseits die Innenseite der Hülse (2) und andererseits den Schaft (19) oder das diesen umschließende Rohr berühren, oder daß auf den Schaft (19) Ringe (16) mit an ihren äußeren Umfangsbereichen angeordneten Schrägflächen aufgefädelt sind, an welchen Schrägflächen als Verdrängungskörper (3) dienende Kugeln gehalten sind.

16. Paßelement nach einem der vorstehenden Ansprüche, dadurch gekennzeichnet, daß zwischen der insbesondere wenigstens einen Längsschlitz aufweisenden bzw. geschlitzten Hülse (2) und den Kugeln oder dergleichen Verdrängungskörper (3) ein dünnwandiges Rohr, vorzugsweise aus Metall, als Rollfläche für die Kugeln oder dergleichen beim Spannen, angeordnet ist.

## Claims

1. A bolt-like locating element (1) for the fixing, centring and/or positioning of parts with centring holes, particularly of plates or the like lying one on top of the other, including an outer bush or sleeve (2) which presents the locating surface and is internally provided with displacement elements which, by axial movement, enlarge the radial external dimension of the locating element (1) within the centring holes, characterized in that at least three balls in the form of displacement elements (3) are arranged inside the sleeve (2), each in a cross-sectional plane of the locating element (1), said balls having their centre points arranged on a circle lying in concentric relationship to the centre axis of the locating element (1) and in each case being applied directly or indirectly to the inside of the sleeve (2), that said displacement elements (3) are in each case supported at at least one spherical surface situated at an angle relative to a radial cross-sectional plane, which surface is arranged in such a way that the interspace (4) departing from the contact point widens radially outwardly in a generally cone shape, that a plurality of zones formed by at least three balls are provided in the axial direction, that the locating element (1) has over its axial extent a uniform external dimension and the plurality of balls arranged on parallel circles or cross-sectional planes are each of the same size, that the spherical surfaces serving for moving the balls radially outwardly belong to balls (6) which are arranged side by side in the axial direction in the centre of the locating element (1) and are each at a distance from one another which is smaller than the diameter of the balls serving as displacement elements (3), whereby the displacement balls (3) are in each case arranged in the radially outwardly widening interspace of the central balls (6) lying side by side in the axial direction, and that at least one pressure element (5) acting in the axial direction is provided, the axial pressing of which inside the sleeve (2) against the spherical surfaces transforms the axial pressing force into radial, pressure forces acting at the periphery and distributes the same, and that the wall of the sleeve (2) is elastically expandable, at least slightly so, by the radial pressure forces.

2. A locating element as claimed in claim 1, characterized in that the balls serving as displacement elements (3) are arranged in the sleeve (2) between two stops which serve as pressing elements (5) and in particular are situated inside the sleeve, of which stops at least one is axially movable.

3. A locating element as claimed in claim 1 or claim 2, characterized in that at least one of the stops or pressing elements (5) which act axially upon the balls and press them against the spherical surfaces giving way outwardly according to said action is movable in the axial direction by means of a thread and by rotation relative to the sleeve (2) and/or relative to the other stop.

4. A locating element as claimed in any one of claims 1 to 3, characterized in that for receiving the balls (3) serving as displacement elements there is a cage (7) provided having, in the region of the balls serving as displacement elements (3), a radial opening (8) through which the respective displacement ball (3) reaches the inside of the locating element sleeve (2) containing said cage (7) together with the balls or reaches a thin-walled lining tube of said sleeve.

5. A locating element as claimed in any one of claims 1 to 4, characterized in that the balls serving as displacement elements (3) each lie in the axial direction on lines parallel to surface lines and the passages (8) through the cage shell take the form of elongated slots for in each case at least two axially adjacent displacement balls (3), particularly for all the axially adjacent displacement balls (3).

6. A locating element as claimed in any one of claims 1 to 5, characterized in that an externally threaded pin is provided as pressing element (5) and engages with an internal thread of the sleeve (2) or of the cage (7) containing the balls.

7. A locating element as claimed in any one of claims 1 to 6, characterized in that a cover (9) adapted to be screwed in by way of a thread is provided as counter-stop for the threaded pin and is provided at that end of the sleeve (2) or cage (7) which is opposite the threaded pin.

8. A locating element as claimed in any one of claims 1 to 7, characterized in that the thread of the threaded pin serving as pressing element (5) ends in spaced relationship to the pin face (10) situated externally in the position of use, said face having in particular an internal polygonal form (11) or the like for application of a turning tool, and that the internal thread of the sleeve (2) or cage (7) likewise ends at a distance (13) from the outer face (14) and the opening of the cage (7) or sleeve (2) is narrowed in this area, so that the threaded pin can be screwed in from the opposite face until it strikes against said area as the initial position.

9. A locating element as claimed in any one of claims 1 to 8, characterized in that the wall of the sleeve (2) is internally and/or externally formed with weakenings (15), whereby the displacement elements (3) are applied internally in that area of said sleeve (2) which is unweakened at least at the outside of the locating element or sleeve.

10. A locating element as claimed in any one of claims 1 to 9, characterized in that the sleeve has at least one longitudinal slot facilitating its expansion in the individual zones that lie axially side by side and present displacement elements (3), the longitudinal slot preferably being filled and closed by an elastic sealing material.

11. A locating element according to the preamble of patent claim 1, characterized in that a plurality of displacement elements (3) in the form of balls are arranged axially side by side inside the sleeve (2) and are in each case supported at at least one sloped face situated at an angle relative to a radial cross-sectional plane of the sleeve (2), the slope of which is arranged in such a way that the space (4) departing from the contact point widens radially outwardly in a generally cone shape, that the balls serving as displacement elements (3) are in each case arranged between recesses (4) widening slantwise outwardly which are formed in the edges of rings (16) in spaced relationship to one another, whereby the rings (16) provided with the sloped faces at their outer periphery are kept apart by the balls each situated between two such rings (16) and the areas (4) of the rings (16) exhibiting the sloped faces are of a radial depth corresponding to or smaller than the diameter of the balls, and that at least one pressure element (5) acting in the axial direction is provided, the axial pressing of which inside the sleeve (2) against the sloped face(s) transforms the axial pressing force into radial, pressure forces acting at the periphery and distributes the same, and that the wall of the sleeve (2) is elastically expandable, at least slightly so, by the radial pressure forces.

12. A locating element as claimed in any one of the preceding claims, characterized in that the outer sleeve (2) is made of compliant metal, preferably steel, or of in particular hard plastics and in particular is continuously closed in the axial and in the circumferential direction.

13. A locating element as claimed in any one of claims 1 to 12, characterized in that the stops acting upon the displacement elements (3) from both sides are formed by a bolt with a head (17) as the one stop and by a spaced nut (18) as the second stop, whereby within the sleeve (2) preferably one of the stops is safeguarded and fixed, particularly also in the axial direction, at least so as to be prevented from turning, and the other stop is axially movable by the screw action.

14. A locating element as claimed in claim 13, characterized in that the displacement elements (3) are arranged between the sleeve (2) and the shank (19) of the bolt, or a tube surrounding said shank, in particular take the form of balls or the like.

15. A locating element as claimed in any one of claims 1 to 14, characterized in that the space provided between the inside of the sleeve (2) and the shank (19) is larger than the diameter of the balls serving as displacement elements (3) but smaller than double the diameter of the balls, and that balls in cross-sectional planes of the locating element (1) are stacked in the space, the balls alternately contacting on the one hand the inside of the sleeve (2) and on the other the shank (19) or the tube enclosing the shank, or that rings (16) having sloped faces arranged at their outer peripheral regions are strung on the shank (19), whereby the balls serving as displacement elements (3) are held at said sloped faces.

16. A locating element as claimed in any one of the preceding claims, characterized in that a thin-walled tube, preferably of metal, as rolling surface for the balls or the like during tightening is arranged between the sleeve (2), which has particularly at least one longitudinal slot or is slotted, and the balls or similar displacement elements (3).

## Revendications

1. Elément d'ajustage (1) en forme de goupille pour la fixation en position, le centrage et/ou le positionnement de pièces présentant des trous d'ajustage, notamment de plaques superposées ou analogues, avec un manchon (2) ou douille extérieure présentant la surface d'ajustage et à l'intérieur duquel sont prévus des corps de refoulement (3) qui, par déplacement axial, augmentent la dimension extérieure radiale de l'élément d'ajustage (1) à l'intérieur des trous d'ajustage, caractérisé en ce qu'au moins trois billes sont disposées comme corps de refoulement (3) à l'intérieur du manchon (2), respectivement dans un plan de section de l'élément d'ajustage (1), billes dont les centres sont disposés sur un cercle concentrique à l'axe médian de l'élément d'ajustage (1) et qui sollicitent chacune directement ou indirectement le côté intérieur du manchon (2), en ce que ces corps de refoulement (3) s'appuient respectivement contre au moins une face sphérique qui se trouve sous un angle par rapport à un plan de section radial et dont la surface est disposée de telle sorte que l'espace intermédiaire (4) partant du point de contact s'élargit environ coniquement vers l'extérieur en direction radiale, en ce que plusieurs zones formées d'au moins trois billes sont prévues en direction axiale, en ce que l'élément d'ajustage (1) possède une dimension extérieure constante sur son étendue axiale, et les billes disposées sur des plans de section ou cercles parallèles sont respectivement de même taille, en ce que les faces sphériques servant au déplacement radial des billes vers l'extérieur appartiennent à des billes (6) qui sont disposées en juxtaposition en direction axiale au milieu de l'élément d'ajustage (1) et qui présentent une distance mutuelle qui est inférieure au diamètre des billes servant de corps de refoulement (3), les billes de refoulement (3) étant respectivement disposées dans l'espacement, s'élargissant radialement vers l'extérieur, des billes centrales (6) juxtaposées en direction axiale, et en ce qu'est prévu au moins un corps de compression ou corps presseur (5) agissant en direction axiale, dont la pression axiale sur les faces sphériques à l'intérieur du manchon (2) transforme et divise la force de pression axiale en forces de compression radiales agissant sur la périphérie, et en ce que la paroi du manchon (2) est élastiquement au moins légèrement élargissable par les forces de compression radiales.

2. Elément d'ajustage selon la revendication 1, caractérisé en ce que les billes servant de corps de refoulement (3) sont disposées dans le manchon (2) entre deux butées servant de corps presseurs (5) et se trouvant notamment à l'intérieur du manchon, butées dont au moins une peut être déplacée en direction axiale.

3. Elément d'ajustage selon la revendication 1 ou 2, caractérisé en ce qu'au moins une des butées ou corps presseurs (5) sollicitant les billes (3) en direction axiale et les pressant contre les faces sphériques qui cèdent vers l'extérieur conformément à cette sollicitation, peut être déplacée en direction axiale au moyen d'un filetage et par rotation par rapport au manchon (2) et/ou par rapport à l'autre butée.

4. Elément d'ajustage selon une des revendications 1 à 3, caractérisé en ce qu'une cage (7) est prévue pour recevoir les billes (3) servant de corps de refoulement, cage qui possède respectivement, dans la région des billes servant de corps de refoulement (3), une brèche radiale (8) par laquelle le corps de refoulement respectif (3) atteint le côté intérieur du manchon (2) de l'élément d'ajustage qui contient cette cage (7) pourvue des billes, ou un tube d'habillage à paroi mince de ce manchon.

5. Elément d'ajustage selon une des revendications 1 à 4, caractérisé en ce que les billes servant de corps de refoulement (3) se trouvent respectivement en direction axiale sur des parallèles à des génératrices, et les passages (8) à travers l'enveloppe de la cage sont réalisés sous la forme de fentes longitudinales pour, chaque fois, au moins deux billes de refoulement (3) voisines en direction axiale, notamment pour toutes les billes de refoulement (3) voisines en direction axiale.

6. Elément d'ajustage selon une des revendications 1 à 5, caractérisé en ce qu'est prévu comme corps presseur (5) une vis sans tête pourvue d'un filetage extérieur, qui s'engage dans un filetage intérieur du manchon (2) ou de la cage (7) contenant les billes.

7. Elément d'ajustage selon une des revendications 1 à 6, caractérisé en ce qu'est prévu, comme contre-butée pour la vis sans tête, un couvercle (9) qui, au moyen d'un filetage, peut lui-même être vissé sur le côté du manchon (2) ou de la cage (7) qui est opposé à la vis sans tête.

8. Elément d'ajustage selon une des revendications 1 à 7, caractérisé en ce que le filetage de la vis sans tête servant de corps presseur (5) se termine à distance de son côté frontal (10) situé à l'extérieur en position d'utilisation, côté qui présente notamment un multi-pans creux (11) ou analogue pour l'engagement d'un outil de rotation, et en ce que le filetage intérieur du manchon (2) ou de la cage (7) se termine également à une distance (13) du côté frontal extérieur (14), et l'ouverture de la cage (7) ou du manchon (2) est rétrécie dans cette région, de sorte que la vis sans tête peut être vissée par le côté frontal opposé jusqu'à ce qu'elle vienne buter contre cette région, atteignant ainsi sa position initiale.

9. Elément d'ajustage selon une des revendications 1 à 8, caractérisé en ce que le manchon (2) présente des affaiblissements de paroi (15) pratiqués sur son côté intérieur et/ou sur son côté extérieur, les corps de refoulement (3) agissant à l'intérieur du manchon (2) dans la région de ce manchon qui, au moins sur le côté extérieur de l'élément d'ajustage ou du manchon, n'est pas affaibli.

10. Elément d'ajustage selon une des revendications 1 à 9, caractérisé en ce que le manchon possède au moins une fente longitudinale facilitant son élargissement dans les zones individuelles axialement juxtaposées présentant des corps de refoulement (3), fente qui, de préférence, est remplie et fermée par un matériau d'étanchéité élastique.

11. Elément d'ajustage selon le préambule de la revendication 1, caractérisé en ce que plusieurs corps de refoulement (3) réalisés sous forme de billes sont disposés à l'intérieur du manchon (2) et s'appuient respectivement contre au moins une face biaise qui se trouve sous un angle par rapport à un plan de section radial du manchon (2), face dont le biais est disposé de telle sorte que l'espace intermédiaire (4) partant du point de contact s'élargit environ coniquement vers l'extérieur en direction radiale, en ce que les billes servant de corps de refoulement (3) sont ici respectivement disposées entre des évidements marginaux (4), s'élargissant en oblique vers l'extérieur, de bagues (16) mutuellement distantes, les bagues (16) pourvues des faces biaises disposées sur leur périphérie extérieure étant maintenues à distance par les billes se trouvant respectivement entre deux telles bagues (16), et la profondeur radiale des régions (4) des bagues (16) qui présentent les faces biaises étant environ égale ou inférieure au diamètre des billes, et en ce qu'est prévu au moins un corps de compression ou corps presseur (5) agissant en direction axiale, dont la pression axiale sur la ou les faces biaises à l'intérieur du manchon (2) transforme et divise la force de pression axiale en forces de compression radiales agissant sur la périphérie, et en ce que la paroi du manchon (2) est élastiquement au moins légèrement élargissable par les forces de compression radiales.

12. Elément d'ajustage selon une des revendications précédentes, caractérisé en ce que le manchon extérieur (2) est réalisé en métal élastiquement flexible, de préférence en acier, ou en matière plastique notamment dure, et est notamment continûment fermé en direction axiale et en direction circonférentielle.

13. Elément d'ajustage selon une des revendications 1 à 12, caractérisé en ce que les butées sollicitant par les deux côtés les corps de refoulement (3) sont formées par une vis avec une tête (17) comme première butée et par un écrou (18) distant de cette vis comme deuxième butée, une des butées étant de préférence fixée et bloquée à l'intérieur du manchon (2) au moins en rotation, et notamment également en direction axiale, et l'autre butée pouvant être déplacée en direction axiale par l'assemblage vissé.

14. Elément d'ajustage selon la revendication 13, caractérisé en ce que les corps de refoulement (3) sont disposés entre le corps (19) de la vis ou un tube entourant ce corps et le manchon (2), notamment sont réalisés sous forme de billes ou analogues.

15. Elément d'ajustage selon une des revendications 1 à 14, caractérisé en ce que l'espace intermédiaire prévu entre le côté intérieur du manchon (2) et le corps (19) est plus grand que le diamètre des billes servant de corps de refoulement (3), mais plus petit que le double du diamètre des billes, et en ce que des billes sont respectivement empilées en superposition dans l'espace intermédiaire dans des plans de section de l'élément d'ajustage (1), billes qui touchent alternativement d'un côté le côté intérieur du manchon (2) et de l'autre côté le corps (19) ou le tube entourant ce dernier, ou en ce que des bagues (16) pourvues de faces biaises disposées sur leurs régions périphériques extérieures sont enfilées sur le corps (19), des billes servant de corps de refoulement (3) étant maintenues sur ces faces biaises.

16. Elément d'ajustage selon une des revendications précédentes, caractérisé en ce qu'un tube à paroi mince, de préférence en métal, servant de surface de roulement pour les billes ou analogues lors du serrage, est disposé entre le manchon (2), notamment fendu ou encore présentant au moins une fente longitudinale, et les billes ou corps de refoulement analogues (3).
